# EUROPEAN PATENT APPLICATION

(11) **EP 3 477 471 A1**
(43) Date of publication of application: **01.05.2019**
(21) Application number: 16907224.6
(22) Date of filing: 27.06.2016
(51) Int. Cl.: G06F 9/50, G06F 9/46, H04L 12/70

(54) **CONTROL DEVICE, VNF DEPLOYMENT DESTINATION SELECTION METHOD, AND PROGRAM**

(71) Applicant: NEC Corporation, Tokyo 108-8001 (JP)
(72) Inventor: OOHIRA, Mayo, Tokyo 108-8001 (JP); TAKEMORI, Shigeto, Tokyo 108-0073 (JP)
(74) Representative: Robson, Aidan John
(86) International application number: PCT/JP2016/069014
(87) International publication number: WO 2018/002991

(57) **Abstract**

A control apparatus is provided that provides a virtualization environment network that uses a hardware accelerator. The control apparatus is provided with: first means for holding hardware accelerator requirements that indicate hardware accelerator conditions required by a VNF; second means for holding hardware accelerator configuration information that indicates configuration information of each of a plurality of hardware accelerators that are available; and third means for referring to the hardware accelerator requirements and the hardware accelerator configuration information and selecting, from among the plurality of hardware accelerators, a hardware accelerator to be allocated to the VNF.

## Description

### [TECHNICAL FIELD]

The present invention relates to a control apparatus, a VNF deployment destination selection method and a program. In particular the invention relates to a control apparatus, a VNF deployment destination selection method and a program, concerning network function virtualization management and orchestration.

### [BACKGROUND]

NFV (Network Functions Virtualization) that realizes, through software, functions of network devices and the like by a virtual machine (VM) implemented in a virtualization layer such as a hypervisor (HV) on a server is known (for example, refer to Non-Patent Literatures (NPLs) 1 and 2).

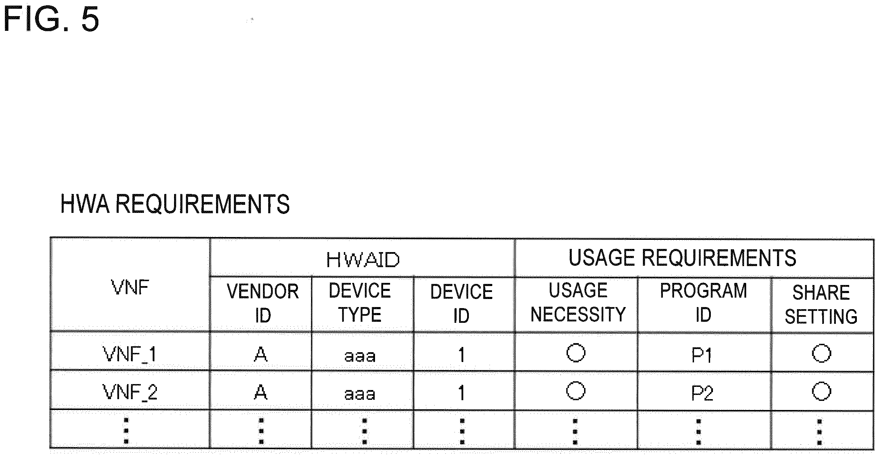

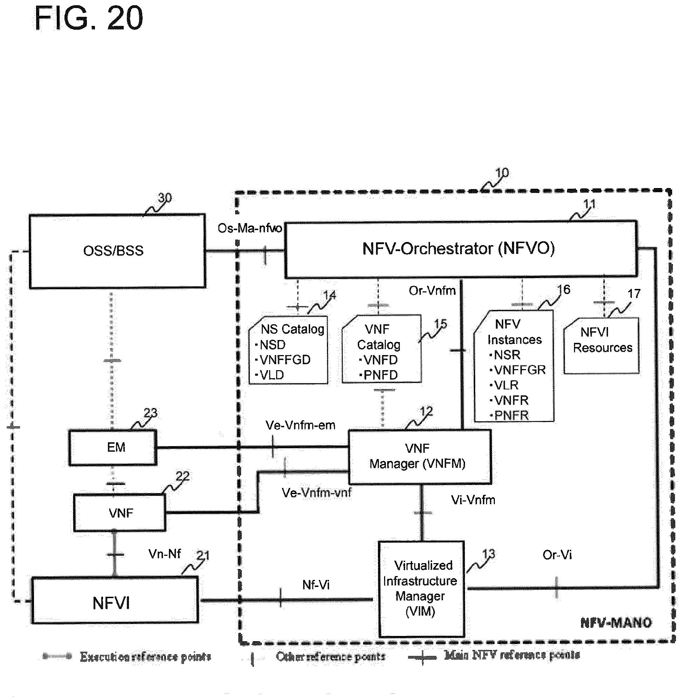

FIG. 20 is a diagram citing Figure 5.1 (The NFV-MANO architectural framework with reference points) on page 23 of Non-Patent Literature 1.

A VNF (Virtualized Network Function) 22 corresponds to an application operated by a virtual machine (VM) on a server, and implements network functions by software. For each VNF 22, a management function of an EM (Element Manager) 23, (also known as EMS (Element Manage System) is provided.

An NFVI (Network Functions Virtualization Infrastructure) 21 is an infrastructure for flexibly handling hardware recourses of a physical machine (server), such as computing, storage, network functionality and the like, as virtualized hardware resources such as virtualized computing, virtualized storage, virtualized network and the like, virtualized in a virtualized layer by a hypervisor or the like.

An NFV Orchestrator (NFVO) 11 in NFV-MANO (NFV Management & Orchestration) 10 performs orchestration of resources of the NFVI 21, and lifecycle management of Network Service (NS) instances (NS instance Instantiation, Scaling, Termination, Update, and the like). It performs management of an NS catalog 14 (NSD/VLD/VNFFGD) and a VNF catalog 15 (VNFD (VNF/PNFD)), and holds an NFV instance repository 16, and an NFVI resource repository 17.

A VNF-Manager (VNFM) 12 performs lifecycle management of VNF instances (for example, instantiation, update, query, scaling, termination, and the like) and event notification.

A Virtualized Infrastructure Manager (VIM) 13 controls computing, storage and network resource management of the NFVI 21, fault monitoring of the NFVI 21, and resource monitoring of the NFVI 21.

OSS (Operations Support Systems) in OSS/BSS 30 is a general term for systems (equipment, software, structure, etc.) necessary, for example, for a communications carrier to build and operate a service. BSS (Business Support Systems) is a general term for information systems (equipment, software, mechanisms, etc.) that a communications carrier, for example, uses for usage charging, billing, customer support and the like.

An NS catalog 14 represents a network service (NS) repository. The NS catalog performs support for generation and management of a network service (NS) descriptor (Network Service Descriptor (NSD), a Virtual Link Descriptor (VLD), or a VNF Forwarding Graph Descriptor (VNFFGD)).

The VNF catalog 15 represents a repository for an on-boarded VNF package. The VNF catalog 15 has a VNFD (VNF Descriptor), a PNFD (PNF Descriptor) and the like.

The NFV instance repository 16 holds instance information of all VNFs and all network services (NS). VNF instances and NS instances are described in VNF and NS records respectively. These records are updated to reflect execution results of VNF lifecycle management operations and NS lifecycle management operations, in respective instance lifecycles.

The NFVI resources repository 17 holds information of available /reserved /allocated NFVI 21 resources, extracted by a VIM 13, and provides information useful for resource reservation, allocation, monitoring and the like. Since it is possible to add reserved/allocated resources of the NFVI 21 to an NS and VNF instance related to these resources (the number of virtual machines used by the VNF 22 in question at an arbitrary point in time in the lifecycle of the VNF 22), the NFVI resource repository 17 is important for resource orchestration in NFVO 11.

In FIG. 20 reference point Os-Ma-nfvo is a reference point between OSS/BSS 30 and NFVO 11, and is used in
- Network Service Lifecycle management requests,
- VNF Lifecycle management requests,
- forwarding of NFV-related state information, exchange of policy management information, and the like. +

Reference point Vi-Vnfm is used in
- resource allocation request from VNFM 12 to VIM 13,
- configuration of virtualized resources and exchange of state information

Reference point Ve-Vnfm-em is used, between EMS 23 and VNFM 12, in
- VNF instantiation, VNF instance retrieval, update, termination, scale out/in, scale up/down,
- configuration from EM (EMS) 23 to VNFM 12, forwarding of events, VNF configuration from VNFM 12 to VNF 22, event notification and the like.

Reference point Ve-Vnfm-vnf is used, between VNF 22 and VNFM 12, in - VNF instantiation, VNF instance retrieval, update, termination, scale out/in, scale up/down, configuring from VNF to VNFM, event forwarding, configuring VNF from VNFM 12 to VNF 22, event notification, and the like.

Reference point Nf-Vi is used in designation of computing/storage resources, along with virtual machine (VM) allocation, updating of VM resource allocation, VM migration, VM termination, generation/removal of links between VMs, allocation of virtualized resource in response to a resource allocation request, forwarding of virtualized resource state information, configuration of hardware resources, exchange of state information and the like.

Reference point Vn-Nf represents an execution environment provided to the VNF 22 by the NFVI 121.

Reference point Or-Vnfm is used in
- a resource related request (authentication, reservation, allocation and the like) by the VNFM 12, forwarding of configuration information to the VNFM 12, and collection of VNF state information.

Reference point Or-Vi is used in
- a reserve resource request by the NFVO 11 to the VIM 13, an allocate resource request and virtualized resource configuration and state information exchange (for details, refer to Non-Patent Literature 1).

The NSD (Network Service Descriptor) of the NS catalog 14 is a Network Service Deployment Template, and has entities defining script/workflow of network functions of particular lifecycle events (instantiation, termination, scaling, etc.)

VNFFGD (VNF Forwarding Graph Descriptor) is a deployment template describing network service topology or a part thereof, by referring to VNF, PNF or a Virtual Link connecting these.

The Virtual Link Descriptor (VLD) is a deployment template describing resource requirements necessary for links between VNFs available in the NFVI 21, between PNFs, or between NS endpoints.

The VNFD (VNF Descriptor) of the VNF catalog 15 is a deployment template describing a VNF from the viewpoint of deployment and operational behavior requirements. The VNDF is mainly used by the VNFM 12 in VNF instantiation and lifecycle management of a VNF instance. The VNFD is used in management and orchestration, by the NFVO 11, of network service and virtualized resources in an NFVI 21 (automation of deployment/ configuration/ management of computer system/ middleware/ service). This includes connectivity/ interface /KPI (Key Performance Indicators) requirements used by the NFVO 11, for virtual link configuration between VNFC instances of the NFVI 21, or VNF instances, and end points of other network functions.

A Physical Network Function Descriptor (PNFD) of the VNF catalog 15 describes virtual link connectivity, interface, and KPI requirements, to an attached physical network function. This is necessary when a physical device is built into an NS, and facilitates network extension.

NS or VNF instantiation operations are executed with respect to the NFVO 11 by an OSS/BSS 30 or a VNFM 12. As a result of the instantiation operation, a record representing a newly generated instance is generated. For example, respective records generated based on information given by respective descriptors or added runtime information related to component instances, provide data for modeling an instance state of a network service (NS). Types of generated instance records include, for example:
- Network Service Record (NSR),
- VNFFG Record (VNFFGR),
- Virtual Link Record (VLR)
- Virtualized Network Function Record (VNFR)
- Physical Network Function Record (PNFR)
NSR, VNFR, VNFFGR and VLR information elements provide data item sets necessary for modeling the state of an NS, VNF, VNFFG, VL instances. A PNF record represents an instance related to a PNF existing from before, forming a portion of the NS, and includes runtime attribute (connectivity to the NFVO) of PNF information.

### [CITATION LIST]

### [NON PATENT LITERATURE]

[NPL 1] ETSI GS NFV-MAN 001 V1.1.1 (2014-12) Network Functions Virtualisation (NFV); Management and Orchestration (retrieved on June 9 2016) <http://www.etsi.org/deliver/etsi_gs/NFV-MAN/001_099/001/01.01.01_60/gs_NFV-MAN001v010101p.pdf>
[NPL 2] ETSI GS NFV-INF 003 V1.1.1 (2014-12) Network Functions Virtualisation (NFV); Infrastructure; Compute Domain (retrieved on June 9 2016) <http://www.etsi.org/deliver/etsi_gs/NFV-INF/001_099/003/01.01.01_60/gs_nfv-inf003v010101p.pdf>

### [SUMMARY]

### [TECHNICAL PROBLEM]

It is to be noted that the respective disclosures of the abovementioned cited technical literature are incorporated herein by reference thereto. The following analysis is given according to the present inventors.

Practical realization of some NFV functions has been started by communications carriers in various countries. By introducing NFV, carrier network functions are virtualized, and by switching dedicated servers to general-purpose servers, lower costs can be anticipated by communication carriers.

Under such conditions, consideration of detailed specifications is progressing for full introduction of NFV, that is, NFV standardization, centered on the European Telecommunications Standards Institute (ETSI). However, with regard to standardization of NFV by the ETSI, there exist areas where discussion is not progressing. For example, with the object of improving performance/power about servers used in a network in a virtualization environment, there is progress in research and development of technology to offload (substitution processing) heavy load processing undertaken by a server to a hardware accelerator (also referred to as HWA below). Specifically, "7.2 Network Interface & Accelerators" in Non-Patent Literature 2 describes handling a hardware accelerator as an NFV resource.

However, there is no specific disclosure in Non-Patent Literatures 1 and 2 regarding how a HWA specification is understood, and how a HWA is managed, when a hardware accelerator is used. Therefore, with regard to the NFV environment a problem occurs in that there is no method of recognizing a hardware accelerator as a resource, and it is not possible to assign a resource considering a hardware accelerator as a VNF requirement.

It is an object of the present invention to provide a control apparatus, a VNF deployment destination selection method, and a program, that contribute to the provision of a virtualization environment network that uses a hardware accelerator.

### [SOLUTION TO PROBLEM]

According to a first aspect of the invention, a control apparatus is provided comprising: first means for holding hardware accelerator requirements that indicate hardware accelerator conditions required by a VNF (Virtualized Network Function); second means for holding hardware accelerator configuration information that indicates configuration information of each of a plurality of available hardware accelerators; and third means for referring to hardware accelerator requirements and the hardware accelerator configuration information and selecting, from among the plurality of hardware accelerators, a hardware accelerator allocated to the VNF.

According to a second aspect of the invention, a VNF deployment destination selection method is provided for a control apparatus comprising: first means for holding hardware accelerator requirements that indicate hardware accelerator conditions required by a VNF (Virtualized Network Function); and second means for holding hardware accelerator configuration information that indicates configuration information of each of a plurality of available hardware accelerators; the method comprising: a step of referring to the hardware accelerator requirements and the hardware accelerator configuration information; and a step of selecting, from among the plurality of hardware accelerators, a hardware accelerator to be allocated to the VNF.

According to a third aspect of the invention, a program is provided to be executed in a computer that controls a control apparatus comprising: first means for holding hardware accelerator requirements that indicate hardware accelerator conditions required by a VNF (Virtualized Network Function); and second means for holding hardware accelerator configuration information that indicates configuration information of each of a plurality of available hardware accelerators; the program executing: a process of referring to the hardware accelerator requirements and the hardware accelerator configuration information; and a process of selecting, from among the plurality of hardware accelerators, a hardware accelerator to be allocated to the VNF. It is to be noted that this program may be recorded in a computer-readable storage medium. The storage medium may be non-transient media such as semiconductor memory, a hard disk, magnetic storage media, optical storage media or the like. The present invention maybe embodied as a computer program product.

### [ADVANTAGEOUS EFFECTS OF INVENTION]

According to the respective aspects the present invention provides a control apparatus, a VNF deployment destination selection method, and a program, which contribute to the provision of a virtualization environment network that uses a hardware accelerator.

### [BRIEF DESCRIPTION OF THE DRAWINGS]

FIG. 1 is a diagram showing an example of a configuration of a control apparatus according to a first exemplary embodiment.
FIG. 2 is a flowchart showing an example of operations of a control apparatus according to the first exemplary embodiment.
FIG. 3 is a diagram showing an example of a network system configuration according to a second exemplary embodiment.
FIG. 4 is a diagram for describing NFV-MANO by functional points according to the second exemplary embodiment.
FIG. 5 is a diagram showing an example of HWA requirements.
FIG. 6 is a diagram showing an example of HWA configuration information.
FIG. 7 is a flowchart showing an example of operations of the NFV-MANO.
FIG. 8 is a flowchart showing an example of operations regarding determination of whether or not a hardware accelerator can be used, by a HWA selection part.
FIGS. 9A-9C are diagrams for describing operations of the second exemplary embodiment.
FIG. 10 is a block diagram showing an example of a hardware configuration of the NFV-MANO according to the second exemplary embodiment.
FIG. 11 is a diagram showing an example of HWA requirements according to the third exemplary embodiment.
FIG. 12 is a flowchart showing an example of operations of the NFV-MANO according to the third exemplary embodiment.
FIGS. 13A-13B are diagrams for describing operations of the third exemplary embodiment.
FIG. 14 is a diagram for describing NFV-MANO by functional points according to a fourth exemplary embodiment.
FIG. 15 is a diagram showing an example of HWA requirements according to the fourth exemplary embodiment.
FIG. 16 is a diagram applying the disclosure of the present application to "Figure B.8: VNF check feasibility message flow" of "B.3.1.1 VNF Check Feasibility" of Non-Patent Literature 1.
FIG. 17 is a diagram applying the disclosure of the present application to "Figure B.12: VNF instance scaling message flow" of "B.4.3 Scaling flow with resource allocation done by NFVO" of Non-Patent Literature 1.
FIG. 18 is a diagram applying the disclosure of the present application to "Figure B.13: Automatic VNF expansion flow triggered by VNF performance measurement results" of "B.4.4.1 Automatic VNF expansion triggered by VNF performance measurement results" of Non-Patent Literature 1.
FIG. 19 is a diagram applying the disclosure of the present application to "Figure B.14: EM initiated VNF expansion flow" of "B.4.4.2 EM initiated VNF expansion" of Non-Patent Literature 1.
FIG. 20 is a diagram citing Figure 5.1 (The NFV-MANO architectural framework with reference points) of page 23 of Non-Patent Literature 1.

### [MODES]

### <First Exemplary Embodiment>

A more detailed description is given concerning a first exemplary embodiment using the drawings. It is to be noted that in each of the exemplary embodiments, the same symbols are attached to the same configuration elements and descriptions thereof are omitted.

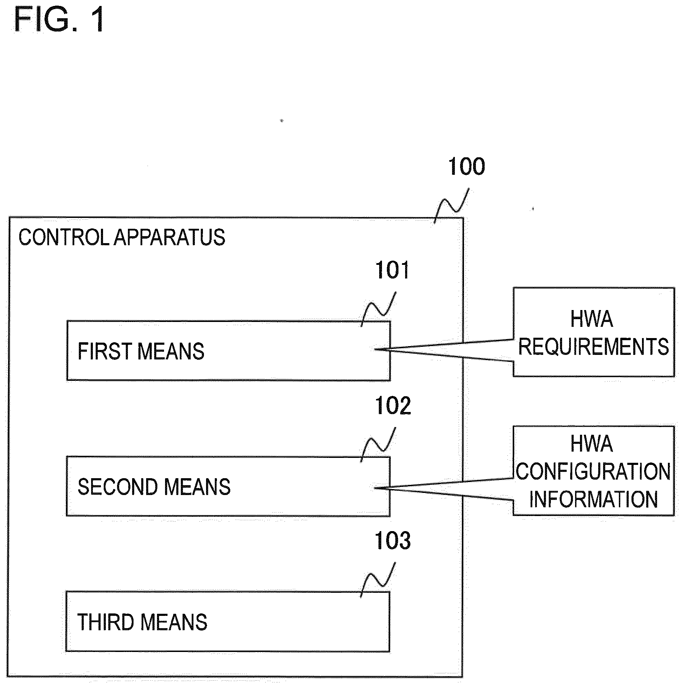

FIG. 1 is a diagram showing an example of a configuration of a control apparatus 100 according to the first exemplary embodiment. Referring to FIG. 1, the control apparatus 100 is provided with first means 101, second means 102, and third means 103.

The first means 101 holds hardware accelerator requirements indicating hardware accelerator conditions necessary for a VNF (Virtualized Network Function).

The second means 102 holds hardware accelerator configuration information indicating configuration information of each of a plurality of available hardware accelerators.

The third means 103 refers to the abovementioned hardware accelerator requirements and the hardware accelerator configuration information, and selects a hardware accelerator to be assigned to the VNF, among the plurality of hardware accelerators.

For example, the first means 101 corresponds to VNFM 12 or a sub-module thereof. The second means 102 corresponds to VIM 13 or a sub-module thereof. The third means 103 corresponds to NFVO 11 or a sub-module thereof.

The hardware accelerator requirements include ID (identifier) information for identifying the hardware accelerator, and requirements that are required of the hardware accelerator by the VNF.

The ID information for identifying the hardware accelerator includes at least one among: a vendor ID for identifying the vendor of the hardware accelerator, a device type indicating the type of device, and a device ID for identifying the device.

The requirements that are required of the hardware accelerator by the VNF include at least one among: usage necessity indicating whether the VNF requires use of the hardware accelerator, a program ID identifying a program when the hardware accelerator is used, and a share setting indicating whether or not it is possible to share the hardware accelerator.

The hardware accelerator configuration information includes ID information for identifying the hardware accelerator, and HWA resource information indicating usage state of the hardware accelerator.

The ID information for identifying the hardware accelerator can be the same as the ID information of the hardware accelerator requirements.

The HWA resource information includes at least one among: usage state indicating whether or not the hardware accelerator is being used, loading ID indicating a program loaded to the hardware accelerator, loadable ID indicating a program that can be loaded to the hardware accelerator, and share setting indicating whether or not the hardware accelerator can be shared.

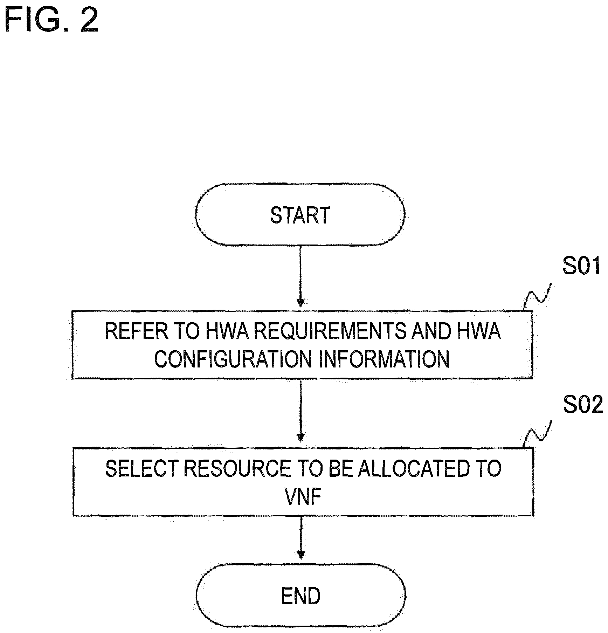

FIG. 2 is a flowchart showing an example of operations of the control apparatus 100 according to the first exemplary embodiment.

If VNF deployment is necessary, the third means 103 refers to hardware accelerator requirements held by the first means 101, and hardware accelerator configuration information held by the second means 102 (step S01).

Thereafter, the third means 103 selects a resource (hardware accelerator) to be assigned to VNF, based on the 2 abovementioned referenced items of information (step S02).

As described above, the control apparatus 100 according to the first exemplary embodiment holds information (hardware accelerator requirements) for understanding a hardware accelerator used by the VNF, being information necessary for the VNF to use the hardware accelerator, and information (hardware accelerator configuration information) for managing the hardware accelerator as an NFVI resource. The control apparatus 100 selects a hardware accelerator assigned to the VNF, using this information. As a result, the control apparatus 100 can perform resource selection considering hardware accelerator, in the NFV environment.

By defining the abovementioned hardware accelerator requirements and hardware accelerator configuration information, it is possible to deploy multi-vendor hardware accelerators as NFVI resource, a suitable hardware accelerator can be assigned to a VNF in response to a hardware accelerator requirement, and hardware acceleration can be realized in an NFV environment.

### <Second Exemplary Embodiment>

Next, a detailed description is given concerning a second exemplary embodiment, making reference to the drawings.

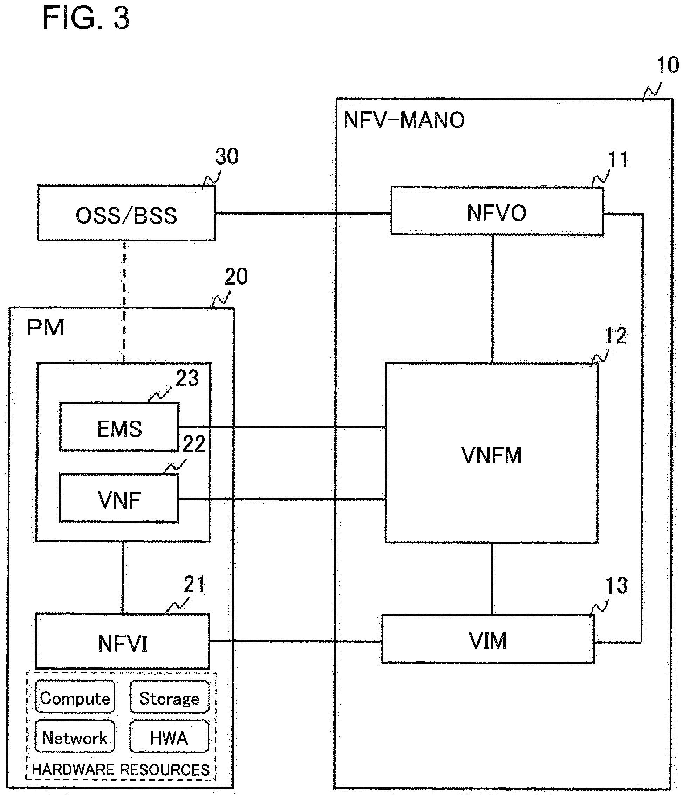

FIG. 3 is a diagram showing an example of a network system configuration according to the second exemplary embodiment. Referring to FIG. 3, the network system includes a network function virtualization management orchestration apparatus (NFV-MANO; also called a control apparatus or a virtualization control apparatus) 10, formed of an NFV orchestrator (NFVO) 11, a VNF manager (VNFM) 12, and a virtualized infrastructure manager (VIM) 13.

The NFVO 11, VNFM 12 and VIM 13 are function entities that perform management of the network system. The VIM 13 generates a virtual machine (VM) and VNF on a physical machine (PM) by control by the NFVO 11 and VNFM 12.

The network system includes a physical machine (PM) 20 and OSS/BSS 30; the physical machine 20 includes the NFVI 21; and the VNF 22 and EMS 23 are configured in the NFVI 21.

The network system shown in FIG. 3 provides communication functions by a virtual server (VNF 22) realized by software in a virtual machine (VM) configured on the physical machine 20.

The physical machine 20 includes a hardware accelerator as a hardware resource, in addition to computing, storage and a network. The NFVI 21 is an infrastructure that handles virtualization hardware resources where a hardware resource including the abovementioned hardware accelerator is virtualized in a virtualized layer such as a hypervisor.

It is to be noted that 1 physical machine 20 is illustrated in FIG. 3, but in actuality a plurality of physical machines 20 are included in the network system. Each physical machine 20 may be provided with at least one or more computing resources. For example, the physical machine 20 may have a plurality of hardware accelerators installed.

The configuration shown in FIG. 3 is an example, and is not intended to limit the configuration of the NFV-MANO 10. For example, the VNFM 12 and VIM 13 can have many-to-many relationships. That is, a VNFM 12 shared with a plurality of VIMs 13 may be provided, or VNFMs 12 corresponding to each of the plurality of VIMs 13 may be provided. Or, the configuration may be such that plural VNFMs 12 are connected to 1 VIM 13, or the configuration may be such that a plurality of VIMs 13 are connected to 1 VNFM 12.

The NFVO 11 performs orchestration of resources of the NFVI 21, and lifecycle management (instantiation of NS instances, scaling, termination, update, etc.) of network service (NS) instances.

The VNFM 12 performs lifecycle management of VNF instances (for example, instantiation, update, query, scaling, termination, etc.) and event notification.

The VIM 13 controls resource management of computing, storage, network, and hardware accelerator of the NFVI 21, fault monitoring of the NFVI 21, resource monitoring of the NFVI 21, and the like.

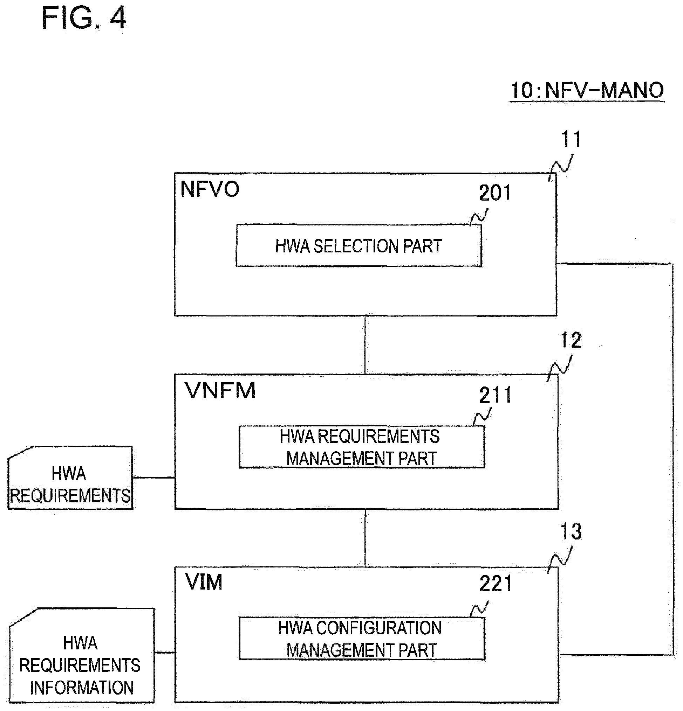

FIG. 4 is a diagram for describing the NFV-MANO 10 by functional points according to the second exemplary embodiment. Referring to FIG. 4, the NFVO 11 is configured to include a HWA selection part 201.

The HWA selection part 201 is a means for referring to the hardware accelerator requirements (denoted below as HWA requirements) and the hardware accelerator configuration information (denoted below as HWA configuration information), and selecting a hardware accelerator to be allocated to the VNF 22, among the plurality of hardware accelerators included in the system. More specifically, the HWA selection part 201 selects new allocation of resources in lifecycle management (for example, instantiation of NS instances, scaling, etc.) of NS instances, and a hardware accelerator allocated to the VNF 22 at a time of modification.

The VNFM 12 is configured to include a HWA requirements management part 211.

The HWA requirements management part 211 is a means for holding and managing HWA requirements. A HWA requirement is information indicating hardware accelerator conditions necessary for the VNF 22. By making reference to the HWA requirements, it is possible to identify a hardware accelerator necessary for the VNF 22.

FIG. 5 is a diagram showing an example of HWA requirements. Referring to FIG. 5, the HWA requirements include information, as a set, of: information identifying the VNF 22, HWA identification information (denoted below as HWA ID) for identifying a hardware accelerator, and requirements (usage requirements) the VNF 22 requires of the hardware accelerator.

As the HWA ID it is possible to use "vendor ID", "device type" and "device ID".

The vendor ID is ID information identifying the vendor of the hardware accelerator.

The device type is ID information identifying the installation position of the hardware accelerator or whether or not a network interface is present. For example, information is used in the device type to make known that the hardware accelerator is a SoC (System on a Chip), an NIC (Network Interface Card), a PCI (Peripheral Component Interconnect) device or the like.

The device ID is ID information by which each device (hardware accelerator) can be individually identified. As the device ID, respective hardware accelerator type numbers, serial numbers and the like can be used.

Usage requirements include "usage necessity", "program ID" and "share setting".

Usage necessity is information indicating whether or not the VNF 22 requires use of the hardware accelerator. It is to be noted that in FIG. 5 and subsequent drawings, "O" is denoted where the VNF 22 requires use of the hardware accelerator, and "x" is denoted where use is not required.

The program ID is ID information of a program in which a hardware accelerator is used within a program (application) of the VNF 22.

The share setting is information indicating whether or not a hardware accelerator can be shared with another VNF 22. The share setting may have a setting that sharing with another VNF 22 is possible, that sharing with another VNF 22 is conditionally possible, or that sharing with another VNF 22 is not possible. It is to be noted that in the description of FIG. 5 and what follows, "O" is denoted where sharing is possible, "Δ" is denoted where conditional sharing is possible, and "X" is denoted where sharing is not possible. As an example where conditional sharing is possible, a case may be cited in which the same program uses the hardware accelerator.

The first line of FIG. 5 indicates that VNF_1 requires use of a hardware accelerator with vendor ID being "A", device type being "aaa", and device ID being "1". The same line indicates that VNF_1 uses the abovementioned hardware accelerator in a program where the program ID is "P1", and on this occasion, sharing with another VNF 22 is possible.

It is to be noted that a network manager sets HWA requirements in the NFV-MANO 10 when network operation is started, or at arbitrary timing. For example, the network manager may set the HWA requirements in the NFV-MANO 10 (VNFM 12) by defining a template describing requirements or constraint conditions required in deployment of the VNF 22 such as a VDUD (VDU Descriptor) or the like.

The VIM 13 is configured to include the HWA configuration management part 221.

The HWA configuration management part 221 is a means for holding and managing HWA configuration information. The HWA configuration information is information indicating respective configuration information of the plurality of hardware accelerators included in the system. The VIM 13 holds HWA configuration information for managing hardware accelerators that physical machines 20 under its control are equipped with.

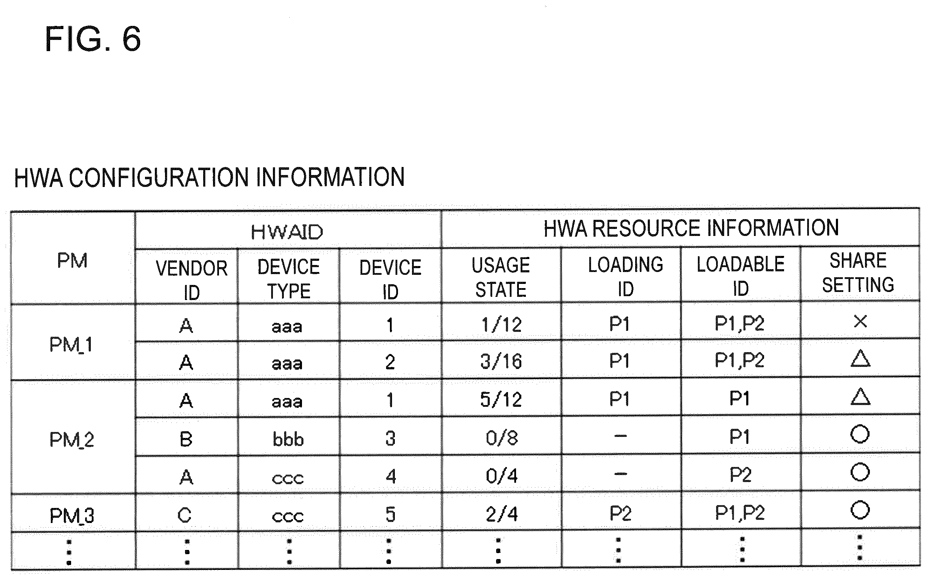

FIG. 6 is a diagram showing an example of HWA configuration information. Referring to FIG. 6, the HWA configuration information includes, as 1 set, information identifying the physical machine 20, HWA identification information (HWA ID described above) for identifying the hardware accelerator, and HWA resource information indicating usage state of the hardware accelerator.

The HWA resource information is used for determining whether or not the hardware accelerator is in an available state.

The HWA resource information includes "usage state", "loading ID", "loadable ID" and "share setting".

The usage state is information indicating whether or not the hardware accelerator is being used in the present state (whether it is attached), with regard to each VF (virtual function) or PF (physical function). For example, it is possible to use hardware accelerator usage rate as the usage state. Specifically, it is possible to use the number of programs (processes) presently being executed with respect to the total number of programs (processes) that are executable in the hardware accelerator, as the usage state. Or, for the usage state, with the hardware accelerator being an NIC, and if communication band can be measured, it is possible to have a range as the usage state.

The loading ID is ID information related to a program written to the hardware accelerator (a program executed in the hardware accelerator).

The loadable ID is ID information related to a program that can be written to the hardware accelerator.

The share setting is as described above.

For example, the first line of FIG. 6 indicates that for the relevant hardware accelerator, a program with program ID of "P1" and "P2" can be executed, but 2 programs cannot be executed at the same time (non-shareable). The same line indicates that in the present state of the hardware accelerator in question, the program with program ID of "P1" is executed, and usage rate thereof is 1/12.

The second line of FIG. 6 indicates that for the hardware accelerator in question, programs with program IDs of "P1" and "P2" can be executed, and a program with program ID of "P1" is being executed. The same line indicates the share setting is set to "conditional sharing possible", and since there is some room in the resources (the usage rate is not 100%), if the program loaded to the hardware accelerator is "P1", assignment to another VNF 22 is possible.

The HWA configuration management part 221 manages the HWA configuration information, similar to management of other NFVI resource information such as computing or the like. More specifically, by adding the abovementioned HWA configuration information to PM management information held by the VIM 13, the HWA configuration information is managed.

The HWA configuration management part 221 updates the HWA resource information of the HWA configuration information whenever the usage state of the hardware accelerator changes.

When the HWA configuration information is set to the NFV-MANO 10 (VIM13), flavor managed by the VIM 13 is used. Specifically, by including the HWA configuration information in the flavor used when the physical machine 20 resource information is registered in the NFV-MANO 10, the HWA configuration information is set in the VIM 13.

It is to be noted that the contents of the HWA requirements and the HWA configuration information have been described using FIG. 5 and FIG. 6, but there is no intention to limit the elements included in this information. The HWA requirements or the HWA configuration information may include elements not shown in FIG. 5 or FIG. 6. For example, the abovementioned "loadable ID" may be used as information (HWA ID) for identifying the hardware accelerator.

Next, a description is given concerning operations of the NFV-MANO 10.

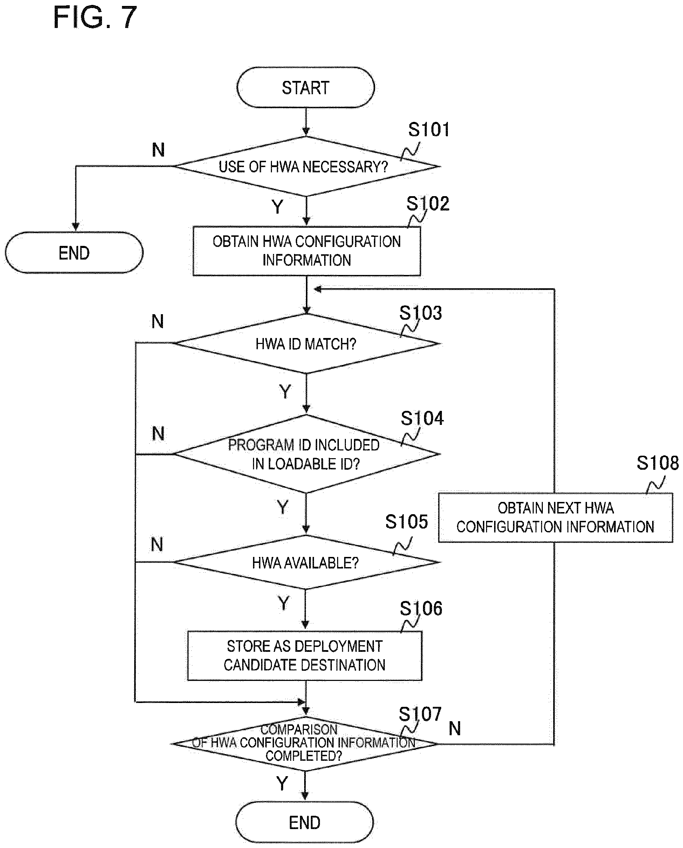

FIG. 7 is a flowchart showing an example of operations of the NFV-MANO 10. The flowchart of FIG. 7 shows accompanying operations when the NFVO 11 performs a Check Resource operation on the VIM 13.

When the Check Resource operation is performed on the VIM 13 at instantiation of the VNF 22, the HWA selection part 201 (NFVO 11) obtains the HWA requirements from the VNFM 12. A reference point Or-Vnfm is used in obtaining the HWA requirements (information exchange)

The HWA selection part 201 determines usage necessity of the hardware accelerator, related to the VNF 22 that performs instantiation (step S101). Specifically, the HWA selection part 201 confirms "usage necessity" included in usage requirements of the VNF 22 in the HWA requirements. As a result of confirmation, in a case where use of the hardware accelerator is necessary (step S101, Yes branch), processing of step S102 and following is executed. As a result of confirmation, in a case where use of the hardware accelerator is not necessary (step S101, No branch), processing shown in FIG. 7 is completed, and normal resource checks are implemented by the NFVO 11.

In step S102, the HWA selection part 201 obtains HWA configuration information from the VIM 13. In a case where a plurality of VIMs 13 are present, the HWA selection part 201 designates 1 VIM 13 and obtains the HWA configuration information. A reference point Or-Vi is used in obtaining the HWA configuration information (information exchange).

In step S103, the HWA selection part 201 compares the HWA ID of the HWA requirements and the HWA ID of the HWA configuration information, and determines whether or not the two match. In a case of matching (step S103, Yes branch), processing of step S104 and following steps is executed. In a case of not matching (step S103, No branch), control transitions to step S107.

In step S104, the HWA selection part 201 determines whether or not a program ID included in the usage requirements of the HWA requirements is included in the loadable IDs of the HWA configuration information. In a case where the program ID is included in the loadable ID (step S104, Yes branch), processing of step S105 and following steps is executed. In a case where the program ID is not included in the loadable ID (step S104, No branch), control transitions to step S107.

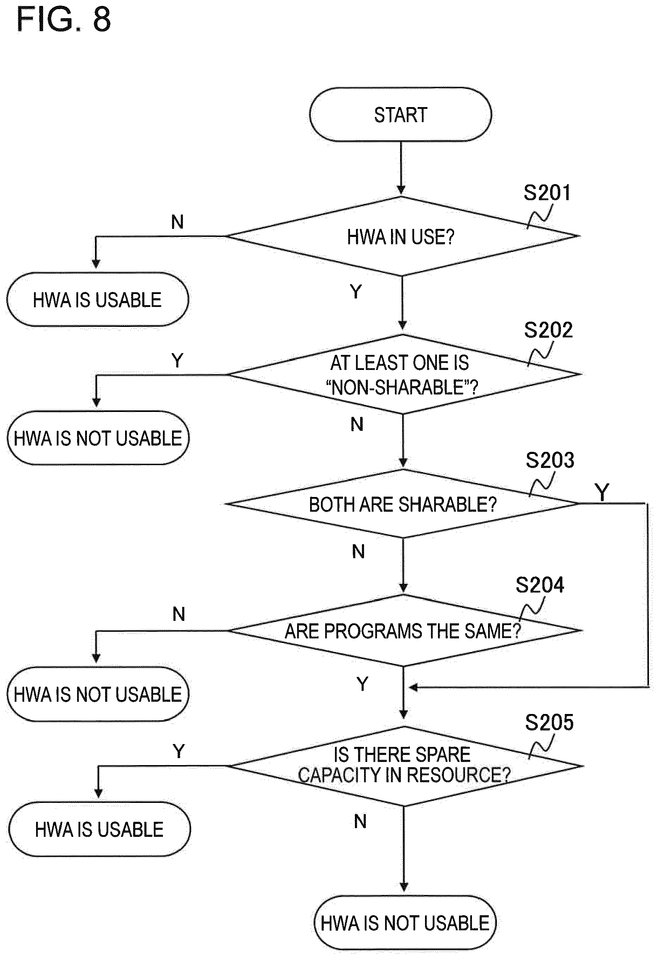

In step S105, the HWA selection part 201 determines whether or not the VNF 22 designated according to the HWA requirements can use the hardware accelerator of the HWA configuration information. In a case where usage is possible (step S105, Yes branch), processing of step S106 and following steps is executed. In a case where usage is not possible (step S105, No branch), control transitions to step S107. Details related to whether or not the hardware accelerator is available according to the HWA selection part 201 are described later using FIG. 8.

In step S106, the HWA selection part 201 stores physical machines 20 including available hardware accelerators and the hardware accelerator in question, as deployment destination candidates of the VNF 22.

In step S107, the HWA selection part 201 determines whether or not comparison of all HWA configuration information and HWA requirements has finished. In a case where there is HWA configuration information for which comparison has not finished (step S107, No branch), the HWA selection part 201 obtains the remaining HWA configuration information (step S108), and repeats processing from step S103 onwards. In a case where comparison has finished (step S107, Yes branch), the HWA selection part 201 finishes processing shown in FIG. 7.

When processing shown in FIG. 7 has finished, the NFVO 11 implements normal resource checking with a target of the physical machine 20 that is the deployment destination candidate stored in step S106.

Next, making reference to FIG. 8, a description is given of operations with regard to determination as to whether or not it is possible to use a hardware accelerator according to the HWA selection part 201.

In step S201, the HWA selection part 201 confirms "usage state" included in the HWA resource information of the HWA configuration information, and determines whether or not the hardware accelerator is being used. Specifically, the HWA selection part 201 determines whether or not the hardware accelerator is being used according to whether or not the usage rate of the hardware accelerator in question is "0", in the usage state of the HWA resource information. If the hardware accelerator is not being used (step S201, No branch), it is determined that the hardware accelerator is available. In a case where the hardware accelerator is being used (step S201, Yes branch), processing of step S202 onwards is executed.

In step S202, the share setting of HWA configuration information and HWA requirements is confirmed, and a determination is made as to whether or not at least one thereof is "non-shareable". In a case where at least one side is non-shareable (step S202, Yes branch), it is determined that the hardware accelerator cannot be used. In a case where at least one side is not non-shareable (step S202, No branch), processing of step S203 onward is executed. In this case, the share setting of the HWA requirements and the HWA configuration information is either "sharing possible" or "conditional sharing possible".

In step S203, the share setting of HWA configuration information and HWA requirements is confirmed, and a determination is made as to whether or not both are "sharing possible". In a case where both are "sharing possible" (step S203, Yes branch), processing of step S205 is executed. In a case where neither is "sharing possible" (step S203, No branch), processing of step S204 onward is executed. In this case, "conditional sharing possible" is included in the share setting of at least one of the HWA configuration information and the HWA requirements.

In step S204, the "loading ID" included in the HWA resource information of the HWA configuration information, and the "program ID" included in usage requirements of the HWA requirements are compared, and a determination is made as to whether or not the two are the same. In a case of the two being the same (step S204, Yes branch), processing of step S205 is executed. If the two are different (step S204, No branch), it is determined that the hardware accelerator cannot be used.

In step S205 the HWA selection part 201 determines whether or not there is spare capacity in resources of the hardware accelerator (determines whether or not there is spare execution capacity in the hardware accelerator). By performing threshold processing with respect to usage state (usage rate) of the HWA resource information, the HWA selection part 201 can determine spare execution capacity of the hardware accelerator. For example, the HWA selection part 201 determines that there is spare capacity in the resources of the hardware accelerator, if the usage rate of the hardware accelerator in question is 50% or less. If there is spare capacity in the resources of the hardware accelerator (step S205, Yes branch), it is determined that the hardware accelerator is available. If there is no spare capacity in the resources of the hardware accelerator (step S205, No branch), it is determined that the hardware accelerator is unavailable.

Details of processing related to step S105 shown in FIG. 7 are as described above.

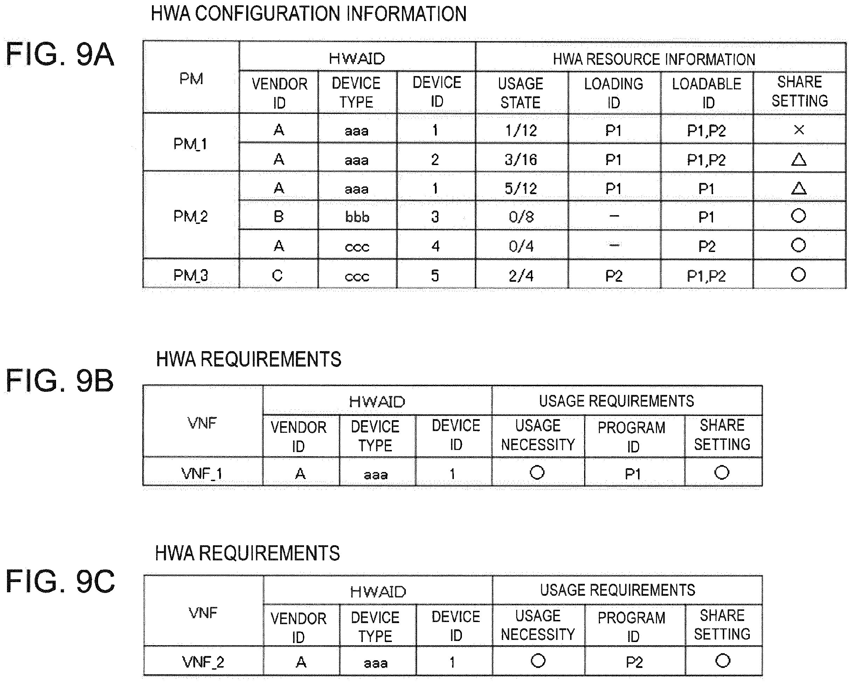

Next, a specific description is given of operations of FIG. 7 and FIG. 8, using FIGS. 9A-9C.

The HWA configuration information held in the VIM 13 is as in FIG. 9A. In this state, a case is considered where instantiation of VNF_1 in the HWA requirements shown in FIG. 9B is required.

Since "usage necessity" included in the usage requirements of the HWA requirements requires usage of a hardware accelerator, matching of HWA requirements and HWA configuration information is performed.

Among the 2 hardware accelerators included in PM_1 shown in FIG. 9A, the HWA ID of the hardware accelerator (device type is 1) in the first line and the HWA ID of the HWA requirements match. Program ID "P1" of the HWA requirements is included in the loadable ID of the hardware accelerator of the first line of the PM_1. Therefore usability of the hardware accelerator in question is determined (step S105 in FIG. 7), but since the share setting in the HWA configuration information of the PM_1 is "non-shareable", PM_1 is not selected as a deployment destination candidate of the VNF_1 shown in FIG. 9B.

Among the 3 hardware accelerators included in PM_2, the HWA ID of the hardware accelerator in the third line of FIG. 9A and the HWA ID of the HWA requirements, match. The loadable ID of the hardware accelerator in question and the program ID of the HWA requirements are "P1" and match. Therefore whether or not it is possible to use the hardware accelerator in question is determined. If the share setting of the third line of PM_2 is confirmed, the setting in question is "conditional sharing is possible". In the case of "conditional sharing is possible", if programs that use a hardware accelerator match, the hardware accelerator in question is available. Since the program ID of FIG. 9A and the loading ID are both "P1" and match, and there is spare capacity in resources of the hardware accelerator, PM_2 is selected as a deployment destination candidate of the VNF_1 shown in FIG. 9B.

Since the HWA ID of the hardware accelerator included in PM_3 and the HWA ID of the HWA requirements do not match, PM_3 is not selected as a deployment destination candidate of the VNF_1.

Next, a case is considered where HWA requirements are as in FIG. 9C.

A point of difference in the HWA requirements shown in FIG. 9B and FIG. 9C is the point that "program ID" included in the usage requirements is different.

In a case of the HWA requirements shown in FIG. 9C, PM_1 and PM_3 are not selected as deployment destination candidates of VNF_2. Regarding PM_1, this is because the share setting of the HWA configuration information is "non-shareable", and the HWA ID is different. Regarding PM_3, this is because the HWA ID does not match.

Regarding PM_2, the share setting for the hardware accelerator shown in the third line of FIG. 9A is "conditional sharing is possible". In the case of "conditional sharing is possible" if programs that use a hardware accelerator match, the hardware accelerator in question is available. However since the loading ID included in the HWA resource information of the hardware accelerator of the third line of the PM_2 shown in FIG. 9A, and the program ID shown in FIG. 9C do not match, PM_2 is not selected as a deployment destination candidate for VNF_2 shown in FIG. 9C.

Next, a description is given concerning hardware of each device forming the network system of FIG. 3.

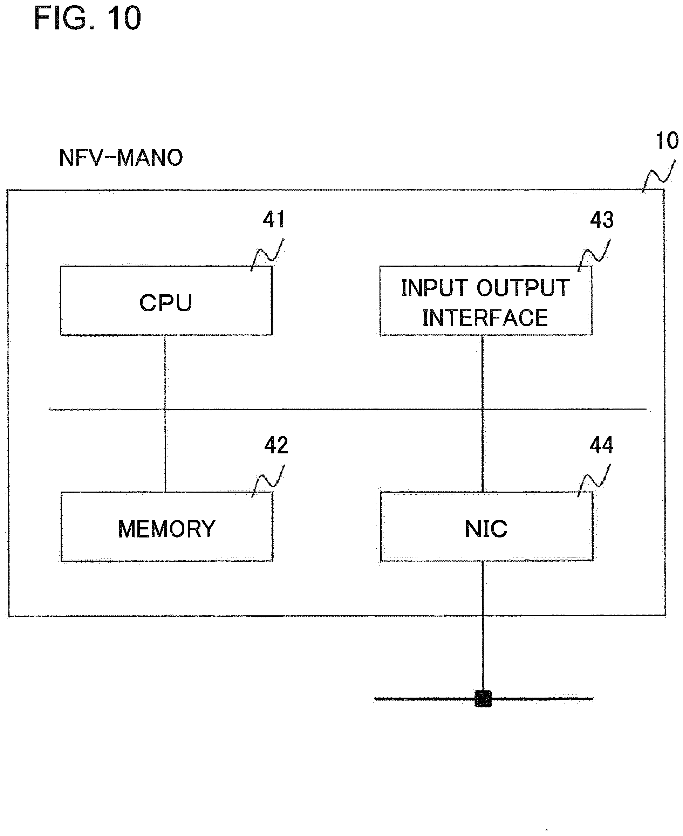

FIG. 10 is a block diagram showing an example of a hardware configuration of the NFV-MANO 10 according to the second exemplary embodiment. The NFV-MANO 10 may be configured by an information processing apparatus (computer) and is provided with a configuration exemplified in FIG. 10. For example, the NFV-MANO 10 is provided with a CPU (Central Processing Unit) 41, a memory 42, an input output interface 43, and an NIC (Network Interface Card) 44 that is a communication means, which are interconnected by an internal bus.

It is to be noted that the configuration shown in FIG. 10 is not intended to limit the hardware configuration of the NFV-MANO 10. The NFV-MANO 10 may include hardware not shown in the drawings. Or, the number of CPUs and the like included in the NFV-MANO 10 is not intended to be limited to the example shown in FIG. 10, and for example, a plurality of CPUs may be included in the NFV-MANO 10.

The memory 42 is RAM (Random Access Memory), ROM (Read Only Memory), or auxiliary storage device (hard disk etc.).

The input-output interface 43 is a means that forms an interface of a display device or input device not shown in the drawings. The display device is, for example, a liquid crystal display or the like. The input device is, for example, a device that receives a user operation such as that of a keyboard, a mouse, or the like.

It is to be noted that respective processing modules of the abovementioned NFV-MANO 10 are realized by the CPU 41 executing a program stored in the memory 42. The program may be downloaded via a network, or may be updated using a storage medium that stores the program. Furthermore, the abovementioned processing module may be realized by a semiconductor chip. That is, it is sufficient to have a means that executes functions performed by the abovementioned processing modules, by some type of hardware and/or software.

The hardware configuration of the physical machine 20 illustrated in FIG. 3 is basically the same as the configuration of the abovementioned NFV-MANO 10, and since it is obvious to those skilled in the field, a description thereof is omitted.

As described above, the NFV-MANO 10 according to the second exemplary embodiment refers to the HWA requirements and the HWA configuration information, selects a hardware accelerator satisfying HWA requirements from among a plurality of hardware accelerators, and selects a physical machine 20 including the selected hardware accelerator as the VNF 22 deployment destination candidate. As a result, it is possible to handle the hardware accelerator as part of NFVI resources, and hardware acceleration can be realized in the NFV environment.

### <Third Exemplary Embodiment>

Next, a detailed description is given concerning a third exemplary embodiment, making reference to the drawings.

In the second exemplary embodiment, a description was given concerning a case of selecting the physical machine 20 as the VNF 22 deployment destination candidate, using HWA ID included in the HWA requirements. In the third exemplary embodiment, a description is given concerning a case of selecting the VNF 22 deployment destination candidate without using a HWA ID. It is to be noted that since the network configuration and functional configuration may be the same as in the second exemplary embodiment, descriptions corresponding to FIG. 3 and FIG. 4 are omitted.

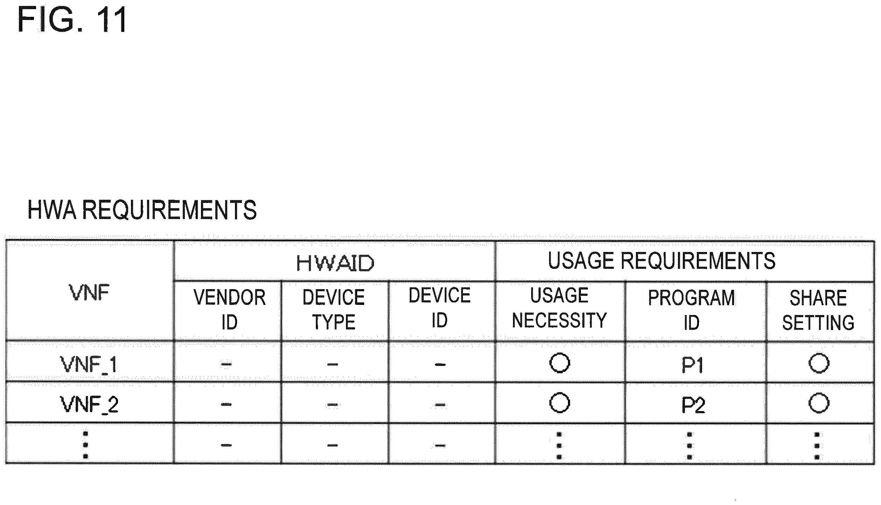

FIG. 11 is a diagram showing an example of HWA requirements according to the third exemplary embodiment. Referring to FIG. 11, a HWA ID is not described in the HWA requirements according to the third exemplary embodiment.

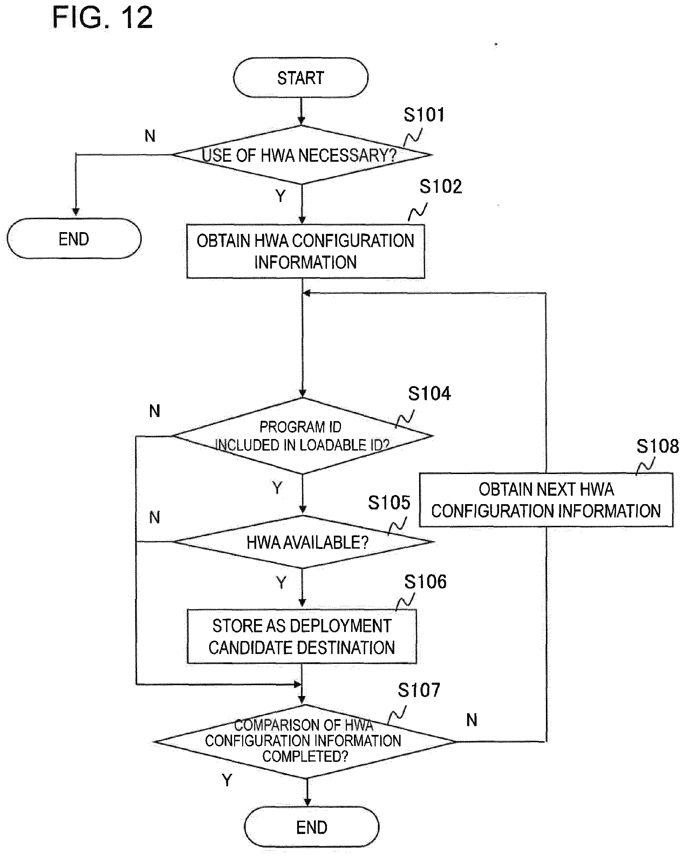

FIG. 12 is a flowchart showing an example of operations of the NFV-MANO 10 according to the third exemplary embodiment. The same step names are attached to the same processes in the flowcharts shown in FIG. 12 and FIG. 7. A point of difference between the flowcharts of FIG. 12 and FIG. 7 is that there is no processing to determine the HWA ID according to step S103.

Even without this determination processing, the HWA selection part 201 according to the third exemplary embodiment can select a physical machine 20 as a VNF 22 deployment destination candidate by a function of the hardware accelerator. Specifically, by selecting HWA configuration information having a loadable ID matching a program ID of the HWA requirements, from among multiple HWA configuration information items, the HWA selection part 201 can select a physical machine 20 forming a VNF 22 deployment destination candidate.

Next, a description is given of operations of the third exemplary embodiment, making reference to the drawings.

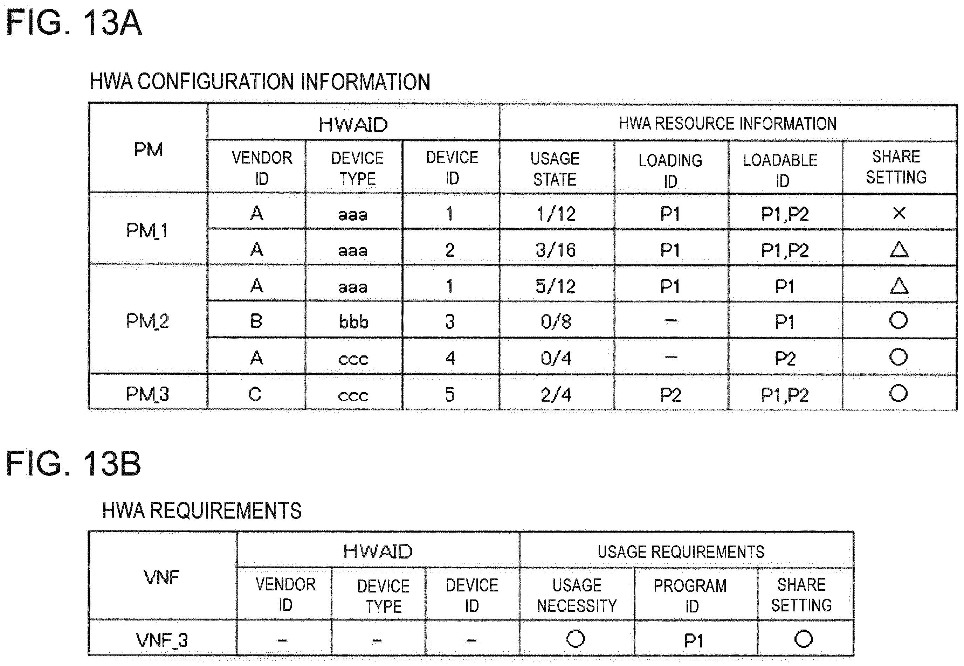

The HWA configuration information held in the VIM 13 is as in FIG. 13A. In this state, a case is considered where instantiation of VNF_3 of the HWA requirements shown in FIG. 13B is required.

In this case, since a program in which the program ID is "P1" can be loaded, a hardware accelerator outside of the hardware accelerator of the fifth line, among 6 hardware accelerators shown in FIG. 13A, can be allocated to VNF_3.

Regarding the hardware accelerator in the first line shown in FIG. 13A, since a share setting of the HWA resource information is "non-shareable", and the program with program ID of "P1" is already being executed, at this point, PM_1 cannot be a VNF_3 deployment destination candidate.

Regarding the hardware accelerator of the second line, the share setting is "conditional sharing is possible", and loading ID and program ID match. The resources of the hardware accelerator in question may be determined to have spare capacity. Accordingly, PM_1 is a deployment destination candidate for VNF_3.

Regarding the hardware accelerator of the third line, the share setting is "conditional sharing is possible", and loading ID and program ID match. The resources of the hardware accelerator in question may be determined to have spare capacity. Accordingly, PM_2 is a deployment destination candidate for VNF_3.

It is to be noted that for the hardware accelerator in the fourth line, since the program having a program ID of "P1" is loadable ("P1" is included in the loadable ID), and the hardware accelerator in question is not being used, PM_2 is the deployment destination candidate for VNF_3.

For the hardware accelerator of the sixth line, since the program having a program ID of "P1" is loadable, and the share setting is "sharable", PM_3 may be a deployment destination candidate for VNF_2.

In this way, it is possible to select a resource (hardware accelerator) to be assigned to the VNF 22, using part of the information among the HWA requirements (not using HWA ID). That is, even without using information (HWA ID) designating a device, among the HWA requirements or HWA configuration information, it is possible to select a hardware accelerator to be assigned to the VNF 22, using a function (usage requirement) of the hardware accelerator.

As described above, even without using the HWA ID (without designating a device), it is possible to select a physical machine having a suitable hardware accelerator as a deployment destination candidate of the VNF 22.

### <Fourth Exemplary Embodiment>

Next, a detailed description is given concerning a fourth exemplary embodiment, making reference to the drawings.

In the first to third exemplary embodiments, no mention was made concerning operations after selecting the deployment destination candidate for VNF 22. In the fourth exemplary embodiment, a description is given concerning operations of the NFV-MANO 10 after selecting a plurality of deployment destination candidates.

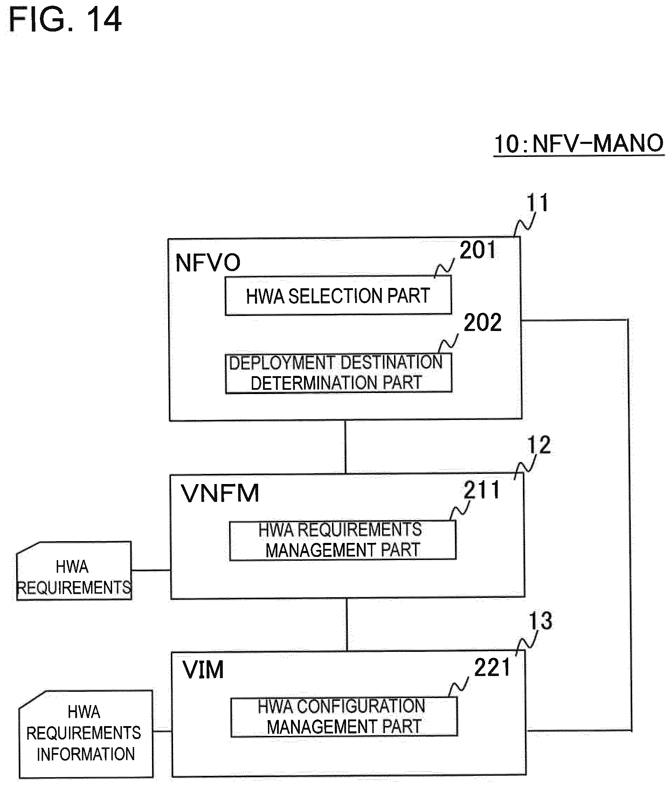

FIG. 14 is a diagram for describing NFV-MANO by functional points according to the fourth exemplary embodiment. A point of difference of the NFV-MANO 10 shown in FIG. 4 and FIG. 14 is that a deployment destination determination part 202 is included in the NFVO 11.

The deployment destination determination part 202 is a means that refers to selection policy described later to determine a resource where the VNF 22 is actually deployed, from among a plurality of resources (hardware accelerators) selected by the HWA selection part 201. The abovementioned selection policy may be set in HWA requirements managed by the VNFM 12.

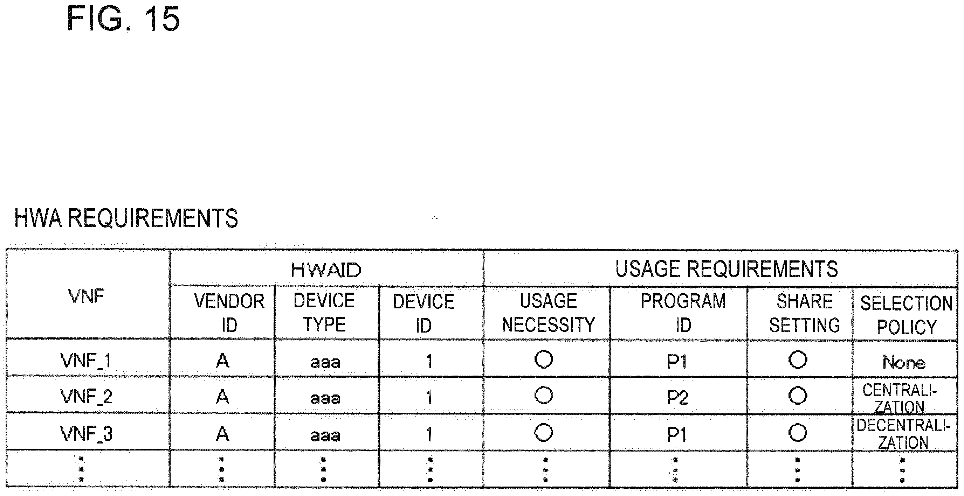

FIG. 15 is a diagram showing an example of HWA requirements according to the fourth exemplary embodiment. Referring to FIG. 15, as a selection policy, "None", "Centralization", "Decentralization", etc. may be set.

In a case where "None" is set as a selection policy, the deployment destination determination part 202 deploys the VNF 22 as an arbitrary deployment destination candidate. For example, the deployment destination determination part 202 deploys VNF 22 to a physical machine 20 that includes an initially selected hardware accelerator (resource).

In a case where "Centralization" is set as a selection policy, the deployment destination determination part 202 preferentially allocates an already used hardware accelerator, or a hardware accelerator with high usage rate (usage state), to VNF 22. However, in a case where there are plural hardware accelerators with about the same usage rate, the deployment destination determination part 202 allocates from among the plural hardware accelerators, in order of selection, to the VNF 22.

In a case where "Decentralization" is set as a selection policy, the deployment destination determination part 202 preferentially allocates an unused hardware accelerator (unused resource) to the VNF 22. In a case where there are no unused hardware accelerators, the deployment destination determination part 202 preferentially allocates a hardware accelerator of low usage rate to the VNF 22. Or, in a case where there are plural unused hardware accelerators, the deployment destination determination part 202 may allocate, in order of selection, to the VNF 22.

In this way, in the fourth exemplary embodiment, a policy (selection policy) is preset in a case where there are plural hardware accelerators selected in the second or third exemplary embodiment, and the policy in question is applied to assignment determination for the VNF 22.

As described above, by adding the selection policy (VNF deployment policy) as a parameter to the HWA requirement, and determining a physical machine (resource) that deploys the VNF by using the policy in question, it is possible to determine an optimum deployment appropriate for the disposition of the VNF.

### <Fifth Exemplary Embodiment>

Next, a detailed description is given concerning a fifth exemplary embodiment, making reference to the drawings.

In the fifth exemplary embodiment, a description is given of a case where the disclosure of the present application can be applied within the specification disclosed by Non-Patent Literature 1.

As described above, the HWA selection part 201 of the NFVO 11 selects a hardware accelerator allocated to the VNF 22 when a resource is newly allocated or changed, in lifecycle management of an NS instance, and extracts a deployment destination candidate.

### For example,

(1) instantiation of the VNF 22,
(2) scaling led by the NFVO 11,
(3) scaling led by the VNFM 12, with VNF as a trigger,
(4) scaling led by the VNFM 12, with EM as a trigger,
may be cited as cases where the HWA selection part 201 operates. It is to be noted that in scaling, in addition to scale-out, scale-up and scale-down are also included. Situations where the HWA selection part 201 operates (application of the disclosure of the present application) are not limited to the abovementioned (1) to (4), and may include redundant reconfiguration after healing.

A description is given below of application of the disclosure of the present application to the respective cases of (1) to (4) described above.

### [Case (1)]

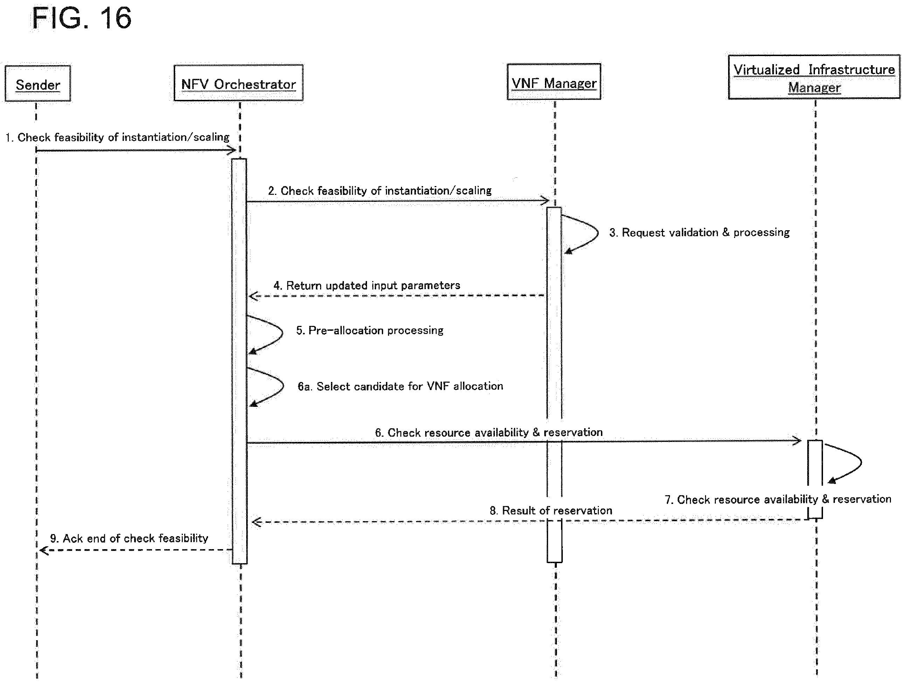

FIG. 16 is a flowchart for a case of applying the disclosure of the present application to "Figure B.8: VNF check feasibility message flow" of "B.3.1.1 VNF Check Feasibility" of Non-Patent Literature 1.

Referring to FIG. 16, "6a. Select candidate for VNF allocation" is added before "6. Check Resource availability & reservation" in the flowchart disclosed in the abovementioned Non-Patent Literature 1. That is, selection of the VNF deployment destination candidate described in the abovementioned exemplary embodiments may be implemented before check resource.

### [Case (2)]

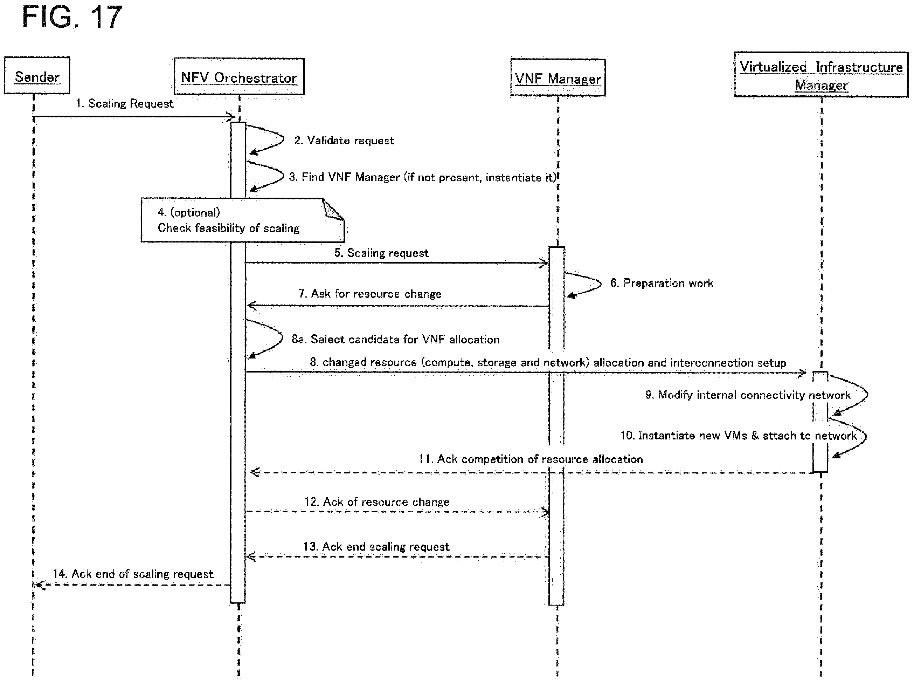

FIG. 17 is a flowchart of a case applying the disclosure of the present application to "Figure B.12: VNF instance scaling message flow" of "B.4.3 Scaling flow with resource allocation done by NFVO" of Non-Patent Literature 1.

Referring to FIG. 17, "8a. Select candidate for VNF allocation" is added before "8. changed resource (compute, storage and network) allocation and interconnection setup" of the flowchart disclosed in the abovementioned Non-Patent Literature 1. In this way, with scaling also, selection of the VNF deployment destination candidate described in the abovementioned exemplary embodiments may be implemented before check resource.

### [Case (3)]

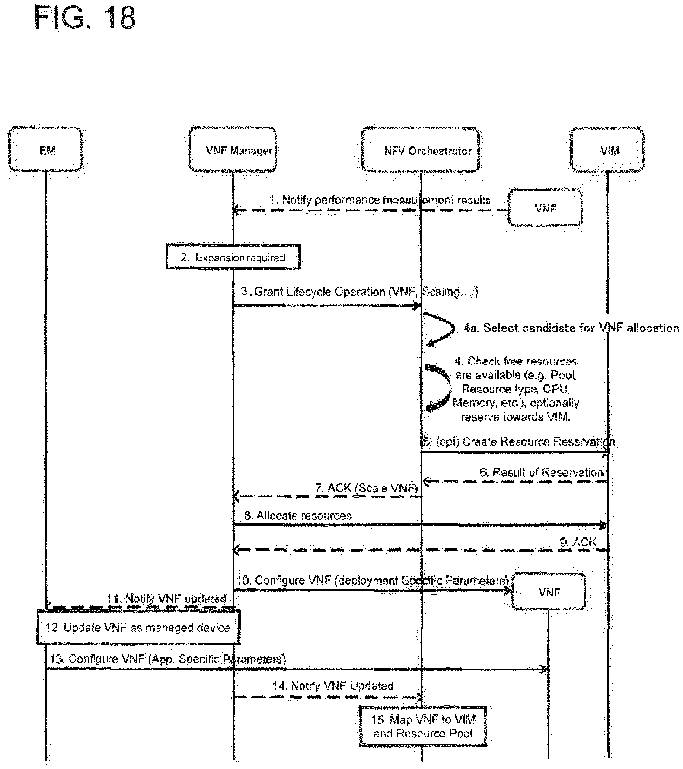

FIG. 18 is a flowchart of a case applying the disclosure of the present application to "Figure B.13: Automatic VNF expansion flow triggered by VNF performance measurement results" of "B.4.4.1 Automatic VNF expansion triggered by VNF performance measurement results" of Non-Patent Literature 1.

Referring to FIG. 18, "4a. Select candidate for VNF allocation" is added before "4. Check free resource are available (e.g. Pool, Resource type, CPU, Memory, etc.), optionally reserve towards VIM." of the flowchart disclosed in the abovementioned Non-Patent Literature 1. In this way, with scaling led by the VNFM 12, in a case where VNF is a trigger also, selection of the VNF deployment destination candidate described in the abovementioned exemplary embodiments may be implemented before check resource.

### [Case (4)]

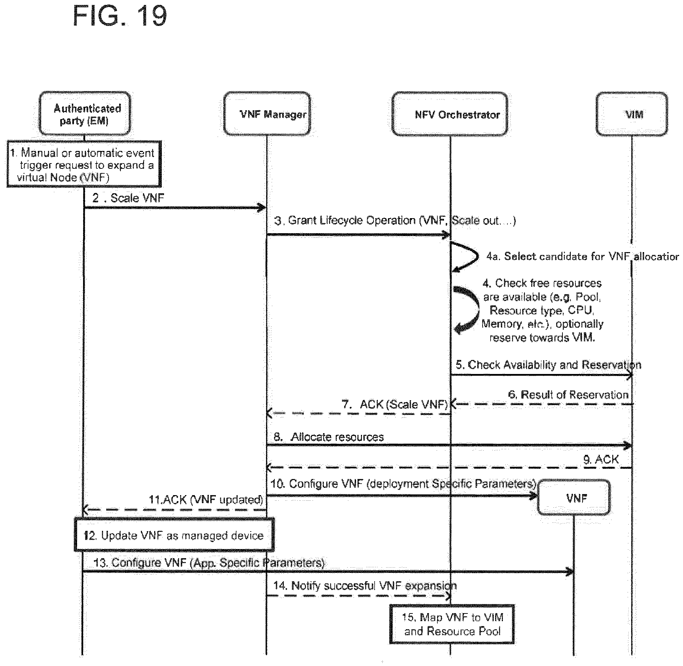

FIG. 19 is a flowchart of a case applying the disclosure of the present application to "Figure B.14: EM initiated VNF expansion flow" of "B.4.4.2 EM initiated VNF expansion" of Non-Patent Literature 1.

Referring to FIG. 19, "4a. Select candidate for VNF allocation" is added before "4. Check free resource are available (e.g. Pool, Resource type, CPU, Memory, etc.), optionally reserve towards VIM." of the flowchart disclosed in the abovementioned Non-Patent Literature 1. In this way, with scaling led by the VNFM 12, in a case where EM is a trigger also, selection of the VNF deployment destination candidate described in the abovementioned exemplary embodiments may be implemented before check resource.

It is to be noted that in FIG. 16 to FIG. 19, a description was given concerning cases of selecting a VNF deployment destination candidate before resource check, but instead of adding the abovementioned selection processing, an operation related to selecting a HWA may be added as one check item when performing a resource check.

As described above, in the various types of flowchart disclosed in Non-Patent Literature 1, by adding processing to select an allocatable resource (hardware accelerator) to the VNF 22, a virtualization environment network using the hardware accelerator can be realized.

In the flowcharts used in the abovementioned description, a plurality of steps (processes) were described, in order, but the order of executing the steps executed in the various exemplary embodiments is not limited to the order described. In the various exemplary embodiments, modification is possible within a scope where there is no substantive interference in the order of the illustrated steps, such as executing the respective processes in parallel. The various exemplary embodiments described above may be combined within a scope that does not conflict with the content.

Some or all of the abovementioned exemplary embodiments may also be described as in the following modes, but there is no limitation to the following.

### <First Mode>

As in the control apparatus according to the first aspect described above.

### <Second Mode>

The control apparatus according to the first mode, wherein the hardware accelerator requirements include at least a requirement that a VNF requires a hardware accelerator.

### <Third Mode>

The control apparatus according to the second mode, wherein requirements required of a hardware accelerator by the VNF include at least one among: usage necessity indicating whether or not the VNF requires use of a hardware accelerator; information for identifying a program when a hardware accelerator is used; and a share setting indicating whether or not it is possible to share a hardware accelerator.

### <Fourth Mode>

The control apparatus according to any one of the first to third modes, wherein the hardware accelerator configuration information includes information for identifying a hardware accelerator, and resource information indicating usage state of a hardware accelerator.

### <Fifth Mode>

The control apparatus according to the fourth mode, wherein the resource information includes at least one among: usage state indicating whether or not a hardware accelerator is being used, information indicating a program loaded to a hardware accelerator, information indicating a program that can be loaded to a hardware accelerator, and share setting indicating whether or not a hardware accelerator can be shared.

### <Sixth Mode>

The control apparatus according to the fourth or fifth mode, wherein the information for identifying the hardware accelerator includes at least one among: information for identifying a vendor of a hardware accelerator, information indicating device type, and information for identifying a device.

### <Seventh Mode>

The control apparatus according to any one of the first to sixth modes, wherein the third means selects a hardware accelerator to be allocated to the VNF, using a part of information included in the hardware accelerator requirements.

### <Eighth Mode>

The control apparatus according to any one of the first to seventh modes, further comprising determining means for determining, in a case where the third means selects a plurality of hardware accelerators to be allocated to a VNF, a hardware accelerator to be allocated to a VNF based on a selection policy, from among the plurality of selected hardware accelerators.

### <Ninth Mode>

The control apparatus according to the first mode, wherein the hardware accelerator requirements include a program ID that identifies a program when a hardware accelerator is used, and a first share setting that indicates whether or not a hardware accelerator is sharable; the hardware accelerator configuration information includes: a usage state indicating whether or not a hardware accelerator is being used, a loading ID indicating a program that is loaded to a hardware accelerator, a loadable ID indicating a program that can be loaded to a hardware accelerator, and a second share setting that indicates whether or not and a hardware accelerator is shareable; and the third means selects a hardware accelerator to be allocated to a VNF from among hardware accelerators where the program ID is included in the loadable ID.

### <Tenth Mode>

The control apparatus according to the ninth mode, wherein the third means does not select, as a hardware accelerator to be allocated to a VNF, the hardware accelerator set as non-shareable, in a case where at least one of the first and second share settings is set as non-shareable.

### <Eleventh Mode>

The control apparatus according to the ninth or tenth mode, wherein the third means selects a hardware accelerator to be allocated to a VNF from among the hardware accelerators set as shareable, in a case where both the first and second share settings are set as shareable.

### <Twelfth Mode>

The control apparatus according to any one of the ninth to eleventh modes, wherein the third means selects a hardware accelerator to be allocated to a VNF, from among hardware accelerators where the loading ID matches the program ID, in a case where both the first and second share settings are not set as non-shareable, and at least one thereof is set as conditionally sharable.

### <Thirteenth Mode>

The control apparatus according to any one of the first to twelfth modes, wherein the third means starts an operation to select a hardware accelerator to be allocated to the VNF, when a VNF is instantiated or when scaling of a VNF is performed.

### <Fourteenth Mode>

As in the VNF deployment destination selection method according to the second aspect described above.

### <Fifteenth Mode>

As in the program according to the third aspect described above.

It is to be noted that the fourteenth and fifteenth modes may be expanded with regard to the second to thirteenth modes, similar to the first mode.

It is to be noted that the various disclosures of the cited patent literature described above are incorporated herein by reference thereto. Modifications and adjustments of exemplary embodiments and examples may be made within the bounds of the entire disclosure (including the scope of the claims) of the present invention, and also based on fundamental technological concepts thereof. Various combinations and selections of various disclosed elements (including respective elements of the respective claims, respective elements of the respective exemplary embodiments and examples, respective elements of the respective drawings, and the like) are possible within the scope of the entire disclosure of the present invention. That is, the present invention clearly includes every type of transformation and modification that a person skilled in the art can realize according to the entire disclosure including the scope of the claims and to technological concepts thereof. In particular, with regard to numerical ranges described in the present specification, arbitrary numerical values and small ranges included in the relevant ranges should be interpreted to be specifically described even where there is no particular description thereof.

### [REFERENCE SIGNS LIST]

- 10: NFV-MANO
- 11: NFVO
- 12: VNFM
- 13: VIM
- 14: NS catalog
- 15: VNF catalog
- 16: NFV instance repository
- 17: NFVI resource repository
- 20: physical machine
- 21: NFVI
- 22: VNF
- 23: EMS
- 30: OSS/BSS
- 41: CPU
- 42: memory
- 43: input output interface
- 44: NIC
- 100: control apparatus
- 101: first means
- 102: second means
- 103: third means
- 201: HWA selection part
- 202: deployment destination determination part
- 211: HWA requirements management part
- 221: HWA configuration management part

## Claims

1. A control apparatus, comprising:
first means for holding hardware accelerator requirements that indicate hardware accelerator conditions required by a VNF (Virtualized Network Function);
second means for holding hardware accelerator configuration information that indicates configuration information of each of a plurality of hardware accelerators that are available; and
third means for referring to said hardware accelerator requirements and said hardware accelerator configuration information, and selecting, from among said plurality of hardware accelerators, a hardware accelerator to be allocated to a VNF.

2. The control apparatus according to claim 1, wherein said hardware accelerator requirements include at least a requirement that a VNF requires a hardware accelerator.

3. The control apparatus according to claim 2, wherein the requirements required of a hardware accelerator by said VNF include at least one among: usage necessity indicating whether or not a VNF requires use of a hardware accelerator, information for identifying a program when a hardware accelerator is used, and a share setting indicating whether or not it is possible to share a hardware accelerator.

4. The control apparatus according to any one of claims 1 to 3, wherein said hardware accelerator configuration information includes information for identifying a hardware accelerator, and resource information indicating usage state of a hardware accelerator.

5. The control apparatus according to claim 4, wherein said resource information includes at least one among: usage state indicating whether or not a hardware accelerator is being used, information indicating a program loaded to a hardware accelerator, information indicating a program that can be loaded to a hardware accelerator, and a share setting indicating whether or not a hardware accelerator can be shared.

6. The control apparatus according to claim 4 or 5, wherein said information for identifying said hardware accelerator includes at least one among: information for identifying a vendor of a hardware accelerator, information indicating a device type, and information for identifying a device.

7. The control apparatus according to any one of claims 1 to 6, wherein said third means selects a hardware accelerator to be allocated to said VNF, using a part of information included in said hardware accelerator requirements.

8. The control apparatus according to any one of claims 1 to 7, further comprising determining means for determining, in a case where said third means selects a plurality of hardware accelerators allocated to a VNF, a hardware accelerator to be allocated to a VNF, based on a selection policy, from among said plurality of selected hardware accelerators.

9. The control apparatus according to claim 1, wherein
said hardware accelerator requirements include a program ID that identifies a program when a hardware accelerator is used, and a first share setting that indicates whether or not a hardware accelerator is sharable;
said hardware accelerator configuration information includes usage state indicating whether or not a hardware accelerator is being used, a loading ID indicating a program that is loaded to a hardware accelerator, a loadable ID indicating a program that can be loaded to a hardware accelerator, and a second share setting that indicates whether or not a hardware accelerator is shareable; and
said third means selects a hardware accelerator to be allocated to a VNF from among hardware accelerators where said program ID is included in said loadable ID.

10. The control apparatus according to claim 9, wherein said third means does not select, as a hardware accelerator to be allocated to a VNF, said hardware accelerator set as non-shareable, in a case where at least one of said first and second share settings is set as non-shareable.

11. The control apparatus according to claim 9 or 10, wherein said third means selects a hardware accelerator to be allocated to a VNF, from among said hardware accelerators set as shareable, in a case where both said first and second share settings are set as shareable.

12. The control apparatus according to any one of claims 9 to 11, wherein said third means selects a hardware accelerator to be allocated to a VNF, from among hardware accelerators where said loading ID matches said program ID, in a case where both said first and second share settings are not set as non-shareable, and at least one thereof is set as conditionally sharable.

13. The control apparatus according to any one of claims 1 to 12, wherein said third means starts an operation to select a hardware accelerator to be allocated to said VNF, when a VNF is instantiated, or when scaling of a VNF is performed.

14. VNF deployment destination selection method for a control apparatus comprising:
first means for holding hardware accelerator requirements that indicate hardware accelerator conditions required by a VNF (Virtualized Network Function); and
second means for holding hardware accelerator configuration information that indicates configuration information of each of a plurality of hardware accelerators that are available;
the method comprising:
a step of referring to said hardware accelerator requirements and said hardware accelerator configuration information; and
a step of selecting, from among said plurality of hardware accelerators, a hardware accelerator to be allocated to a VNF.

15. A program executed in a computer that controls a control apparatus comprising:
first means for holding hardware accelerator requirements that indicate hardware accelerator conditions required by a VNF (Virtualized Network Function); and
second means for holding hardware accelerator configuration information that indicates configuration information of each of a plurality of hardware accelerators that are available;
the program executing:
a process of referring to said hardware accelerator requirements and said hardware accelerator configuration information; and
a process of selecting, from among said plurality of hardware accelerators, a hardware accelerator to be allocated to a VNF.
